# EUROPEAN PATENT APPLICATION

(11) **EP 4 841 432 A1**
(43) Date of publication of application: **18.11.2026**
(21) Application number: 24921523.7
(22) Date of filing: 15.10.2024
(51) Int. Cl.: G06F 8/654, H04W 4/44, G06F 11/07

(54) **ECU FIRMWARE UPGRADE METHOD, APPARATUS, AND SYSTEM, VEHICLE, AND STORAGE MEDIUM**

(30) Priority: 29.01.2024 CN 202410122966
(71) Applicant: Guangzhou Xiaopeng Motors Technology Co., Ltd., Guangzhou, Guangdong Province 510000 (CN)
(72) Inventor: KANG, Erwei, Guangzhou, Guangdong 510000 (CN); HU, Mianzhou, Guangzhou, Guangdong 510000 (CN); YAN, Xue, Guangzhou, Guangdong 510000 (CN)
(74) Representative: Ran, Handong
(86) International application number: PCT/CN2024/125091
(87) International publication number: WO 2025/161499

(57) **Abstract**

The present application provides an ECU firmware upgrade method, apparatus, and system, a vehicle, and a computer readable storage medium. Data in a firmware package is divided into multiple data blocks, and each data block corresponds to an address segment of one storage block in a storage space of an ECU. The method comprises: writing each data block into the corresponding storage block in the storage space; receiving a storage response message returned by the storage space, wherein the storage response message carries a storage block identifier; determining whether a write exception occurs to the storage block; and if it is determined that a write exception occurs to the storage block, determining a target data block on the basis of the storage block identifier in the storage response message, and re-writing the target data block into the storage block pointed to by the storage block identifier. According to the present application, when the writing process is interrupted, a storage block where the breakpoint is located can be determined, allowing for rewriting to the storage block and of subsequent data, thereby achieving breakpoint resume.

## Description

### TECHNICAL FIELD

This application relates to the field of firmware upgrading, and in particular, to a method, an apparatus and a system for upgrading firmware of an electronic control unit (ECU), as well as a vehicle and a computer-readable storage medium.

### BACKGROUND

Over-the-air (OTA) firmware upgrade technology is a technology for obtaining a firmware package from a cloud server to perform firmware upgrade. A user can update the firmware of an ECU of a vehicle anytime and anywhere through the OTA technology, without the need to drive the vehicle to a 4S store and return the vehicle to the manufacturer. A manufacturer can also perform operations such as integrating new functions into devices, upgrading existing functions, and fixing issues through the OTA technology, thereby reducing costs. However, when the user is in a poor communication environment or actively stops the firmware upgrade, the firmware upgrade process may be interrupted, in which case, in existing solutions, an upgrade request will be reinitiated and the firmware package will be retransmitted from the beginning, rendering breakpoint resumption impossible. This increases the time required for firmware upgrade of the device through the OTA technology, seriously affects user experience, and may even affect user safety.

### SUMMARY OF THE INVENTION

To address the problems existing in the related art, the present invention provides a method, an apparatus and a system for upgrading firmware of an ECU, as well as a vehicle and a computer-readable storage medium.

According to a first aspect of the embodiments of the present invention, a method for upgrading firmware of an ECU is provided. Data in a firmware package is divided into multiple data blocks, each data block corresponding to an address range of one storage block in a storage space of the ECU. The method includes:
writing each data block to a corresponding storage block in the storage space;
receiving a storage response message returned from the storage space, the storage response message carrying a storage block identifier;
determining whether a write anomaly occurs in a storage block, the write anomaly including a write anomaly determined based on the storage response message; and
if it is determined that a write anomaly occurs in a storage block, determining a target data block based on the storage block identifier in the storage response message, and rewriting the target data block to a storage block indicated by the storage block identifier.

According to a second aspect of the embodiments of the present invention, a vehicle is provided. The vehicle is provided with an OTA master controller and at least one ECU node. The ECU node has a storage space, which includes a plurality of storage blocks. The OTA master controller is configured to execute the method according to the first aspect.

According to a third aspect of the embodiments of the present invention, an apparatus for upgrading firmware of an ECU is provided. Data in a firmware package is divided into multiple data blocks, each data block corresponding to an address range of one storage block in a storage space of the ECU. The apparatus includes: a data writing module, a message receiving module, an anomaly detection module, and a breakpoint resumption module.

The data writing module is configured to write each data block to a corresponding storage block in the storage space.

The message receiving module is configured to receive a storage response message returned from the storage space. The storage response message carries a storage block identifier.

The anomaly detection module is configured to determine whether a write anomaly occurs in a storage block. The write anomaly includes a write anomaly determined based on the storage response message.

The breakpoint resumption module is configured to, if it is determined that a write anomaly occurs in a storage block, determine a target data block based on the storage block identifier in the storage response message, and rewrite the target data block to a storage block indicated by the storage block identifier.

According to a fourth aspect of the embodiments of the present invention, a system for upgrading firmware of an ECU is provided. The system includes an OTA master control device and at least one ECU node. The ECU node has a storage space, which includes a plurality of storage blocks.

The OTA master control device includes a processor, a memory, and a computer program stored in the memory and executable on the processor. The processor, when executing the program, causes the method according to the first aspect to be implemented.

According to a fifth aspect of the embodiments of the present invention, a computer-readable storage medium is provided. The computer-readable storage medium has a program stored therein. The program, when executed by a processor, causes operations in the method according to the first aspect to be implemented.

The technical solutions according to the embodiments of the present invention bring the following beneficial effects.

In the embodiments of the present invention, a firmware package is first divided into multiple data blocks, correspondence between the data blocks and storage blocks is established, and then each data block is written into its corresponding storage block in the storage space; subsequently, a storage response message returned from the storage space is received, the storage response message carrying a storage block identifier which may be used to determine a storage block to which a breakpoint belongs and a corresponding data block; then, whether a write anomaly occurs in a storage block is determined, the write anomaly including a write anomaly determined based on the storage response message; after the occurrence of a write anomaly is determined and the location of the anomaly is determined, a target data block may be determined based on the storage block identifier, and the target data block may be rewritten to a storage block indicated by the storage block identifier to achieve breakpoint resumption.

It should be appreciated that the above general description and the following detailed description are merely exemplary and explanatory and are not intended to limit the present invention.

### BRIEF DESCRIPTION OF THE DRAWINGS

The accompanying drawings, incorporated herein and constituting a part of the present invention, illustrate embodiments of the present invention, and together with the specification, serve to explain the principles of the present invention.
FIG. 1 is a flowchart of a method for upgrading firmware of an ECU according to an exemplary embodiment of the present invention.
FIG. 1A is an executable file according to an exemplary embodiment of the present invention.
FIG. 1B is a programming status information file according to an exemplary embodiment of the present invention.
FIG. 1C is a description information file according to an exemplary embodiment of the present invention.
FIG. 2 is a structural block diagram of a vehicle according to an exemplary embodiment of the present invention.
FIG. 3 is a block diagram of an apparatus for upgrading firmware of an ECU according to an exemplary embodiment of the present invention.
FIG. 4 is a structural block diagram of a system for upgrading firmware of an ECU according to an exemplary embodiment of the present invention.

### DETAILED DESCRIPTION

Exemplary embodiments will be described in detail here, examples of which are illustrated in the accompanying drawings. When drawings are involved in the following description, same numerals in different drawings represent same or similar elements, unless otherwise indicated. Implementations described in the following exemplary embodiments do not represent all implementations consistent with the present invention. Rather, they are merely examples of apparatuses and methods consistent with some aspects of the present invention as detailed in the appended claims.

Terms as used in the present invention are merely for the purpose of describing specific embodiments and are not intended to limit the present invention. The singular forms "a", "said" and "the" as used in the present invention and the appended claims are also intended to encompass plural forms, unless the context clearly indicates otherwise. It should also be appreciated that the term "and/or" as used herein refers to any or all possible combinations including one or more associated items listed.

It should be appreciated that although terms such as first, second and third may be used in the present invention to describe various information, the information should not be limited to such terms. The terms are merely used to distinguish information of the same type from one another. For example, without departing from the scope of the present invention, first information may also be referred to as second information, and similarly, second information may also be referred to as first information. Depending on the context, the word "if" as used herein may be interpreted as "in a case where" or "when" or "in response to determining".

Embodiments of the present invention will be described in detail below.

Firmware refers to a device "driver" stored within a device. An operating system, through the firmware, can implement operations of a specific machine via a standard device driver. A firmware upgrade process is a process of upgrading the driver to enhance device functionality. An ECU is a control unit typically found in a vehicle and is generally composed of a microcontroller (MCU), a memory (ROM, RAM), an input/output interface (I/O), an analog-to-digital converter (A/D), and large-scale integrated circuits such as shaping circuits and driver circuits. For a user, performing firmware upgrade on a device such as an ECU is inconvenient, and the vehicle can only be driven to a 4S dealership or returned to the manufacturer for the firmware upgrade. Therefore, it is currently a common practice to perform firmware upgrade on vehicle devices using OTA technology, which enables firmware upgrade without substantially affecting normal use by the user.

However, if the user is in a poor communication environment or actively stops firmware upgrade, the firmware upgrade process may be interrupted, in which case, in existing solutions, an upgrade request will be reinitiated and the firmware package will be retransmitted from the beginning, rendering breakpoint resumption impossible. This increases the time required for firmware upgrade of the device through the OTA technology, seriously affects user experience, and may even affect user safety.

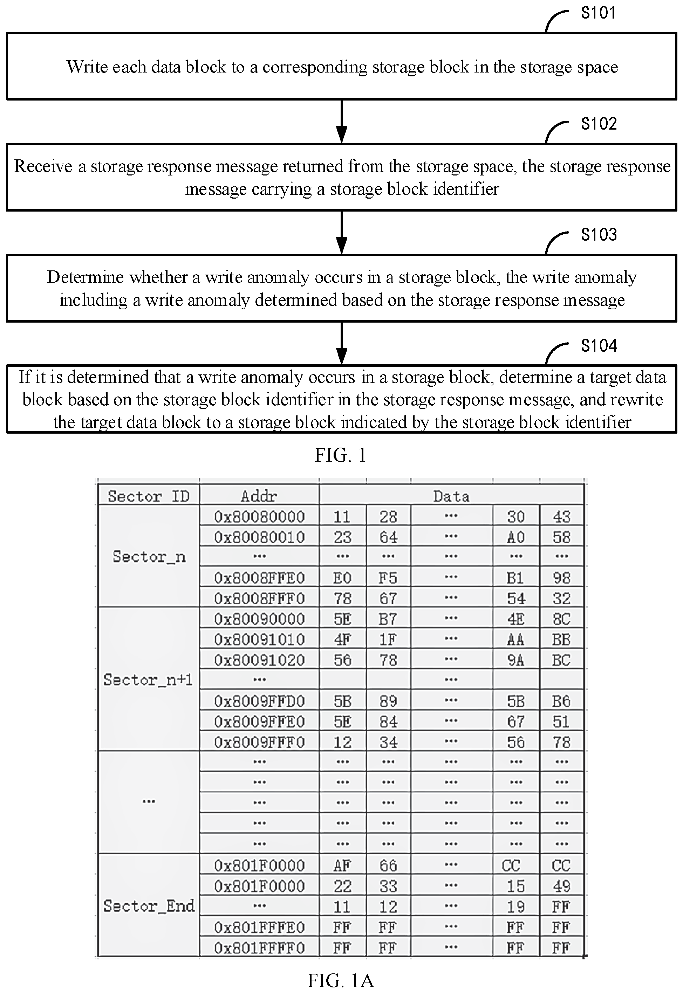

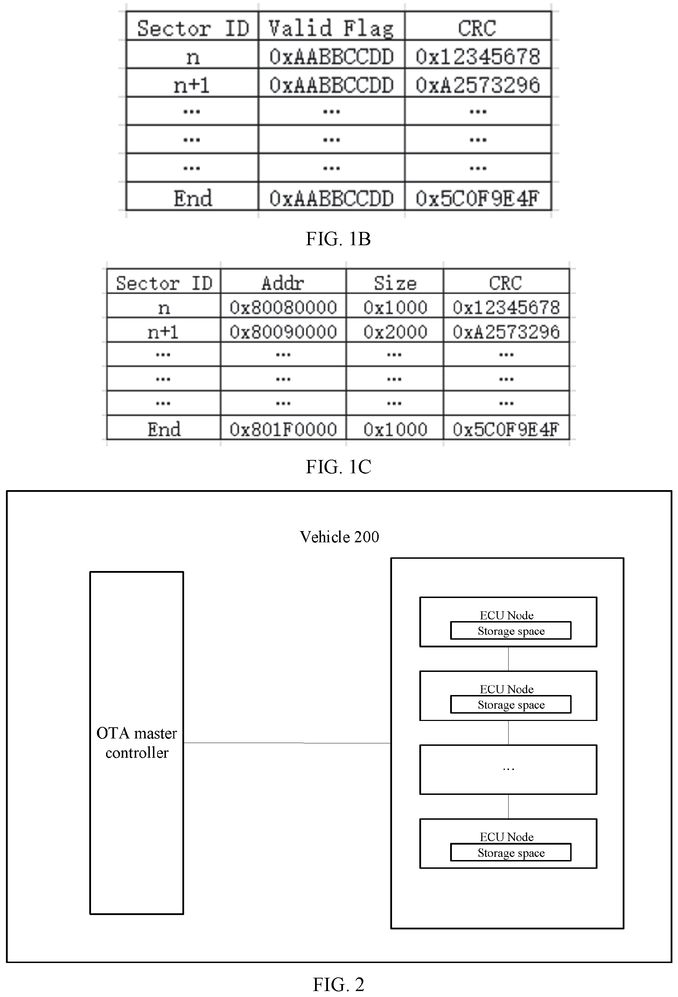

In view of the above, the present invention proposes a method for upgrading firmware of an ECU, as shown in FIG. 1. FIG. 1 is a flowchart of a method for upgrading firmware of an ECU according to an exemplary embodiment of the present invention. Data in a firmware package is divided into multiple data blocks. Each data block corresponds to an address range of one storage block in a storage space of the ECU. The method for upgrading firmware of an ECU disclosed in the present invention may include steps S101 to S104 as follows.

In step S101, each data block is written to a corresponding storage block in the storage space.

In this step, the firmware package may be obtained from a cloud server in advance. The firmware package is divided into multiple data blocks according to sizes of the storage blocks and a write order into the storage blocks. Then, the data blocks in the firmware package are correspondingly written to the storage blocks of the storage space. To better control a firmware upgrade process, a vehicle is generally provided with a controller, called OTA master controller, specifically used to control the firmware upgrade process. The OTA master controller can obtain the firmware package from the cloud server. Of course, the entity that obtains the firmware package in this step may also be another device on the vehicle that is capable of communication with the cloud server. The present invention is not limited in this respect.

According to an embodiment of the present invention, in the above process of dividing the firmware package into multiple data blocks, it is possible to directly establish, within the firmware package, a correspondence between any piece of data and a storage block, and define all pieces of data corresponding to the same storage block as one data block. Alternatively, the above-mentioned firmware package may be divided into multiple firmware sub-packages, with each firmware sub-package corresponding to one or more storage blocks. In the case where each firmware sub-package corresponds to multiple storage blocks, each firmware sub-package may be divided into multiple data blocks, with each data block corresponding to one storage block. In this way, by dividing the firmware package into smaller data blocks, the amount of data that needs to be written in each transmission can be reduced, which reduces the time required for each write process and decreases the probability of interruption during writing.

It will be appreciated that each storage block corresponds to an address range including multiple addresses, and multiple pieces of data may be stored at each address. The above-mentioned "establishing a correspondence between any piece of data and a storage block" may be implemented by specifying a storage address of the data to establish the correspondence between the data and the storage block. Therefore, a memory used in the present invention may be a storage space, which may be Flash, or may be other non-volatile storage media that allow specifying storage addresses of data. The present invention is not limited in this respect.

As an example, the firmware package used in the method of the present invention may include an executable Hex file as shown in FIG. 1A. "Sector ID" is the identifier of a storage block in a storage space such as an internal Flash of the MCU. All data corresponding to the same storage block constitutes a data block.

"Addr" in the figure refers to the address of a storage block. As can be seen from the figure, one storage block corresponds to multiple "Addrs", and the multiple Addrs corresponding to the same storage block constitute the address range of the corresponding storage block. Each address may be in a size of 16 bytes or 8 bytes. The space size of each address is not limited in the present invention.

"Data" is data carried in the firmware package for use in firmware upgrade. For example, "Data" in the figure is hexadecimal data. It may be appreciated that since the size of the firmware package is usually not an integer multiple of the size of a storage block, the last storage block generally cannot be completely filled. According to an embodiment of the present invention, empty spaces may be filled with dummy data (i.e., data in the last two rows and the third-to-last row in the figure; exemplarily, "FF" is used as dummy data in the figure). It can be seen that in the present invention, data is aligned with storage blocks by specifying storage addresses of the data, and empty spaces are filled with dummy data, thereby facilitating data block division, generation of check codes, or execution of other operations.

It will be appreciated that the data under items such as "Sector ID", "Addr" and "Data" shown in the figure is all exemplary. Those skilled in the art can freely determine storage block numbers, address ranges, data and other contents corresponding to the firmware package. The specific contents of the firmware package shown in the figure should not be considered as limiting the present invention.

In step S102, a storage response message returned from the storage space is received. The storage response message carries a storage block identifier.

In this step, the storage response message at least includes a storage block identifier and may also include other information helpful for determining interruption of transmission and location of a breakpoint. The present invention is not limited in this respect.

In step S103, it is determined whether a write anomaly occurs in a storage block. The write anomaly includes a write anomaly determined based on the storage response message.

In this step, the OTA master controller may determine whether a write anomaly occurs based on the storage response message. Of course, the OTA master controller may also determine whether a write anomaly occurs based on other messages such as an operation request from a user. For example, a write anomaly is determined to occur when it is detected that a write process is interrupted by the user.

According to an embodiment disclosed in the present invention, the storage response message at least carries one of: a response duration and a first check code. The first check code is generated based on data already written to a storage block and is used to indicate that a write error occurs in the storage block. Correspondingly, the write anomaly determined based on the storage response message at least includes: the response duration of the storage response message exceeding a preset value or a write error occurring in the storage block. The write error may include: an error in the data already written to the storage block or the storage block not being fully written.

According to an embodiment disclosed in the present invention, to determine whether a storage block is not fully written, programming status information "ProgramInfo" shown in FIG. 1B may be stored in a memory (such as an EEPROM, a DFLASH or the like) outside the storage space of the ECU. For each storage block, the above-mentioned programming information at least includes "Valid Flag" and the above-mentioned first check code (a "CRC" check code is used as an example in the figure). "Valid Flag" is a special sequence used to indicate that the current storage block is fully written. By detecting the state of the storage block and the presence of the above-mentioned special sequence "Valid Flag", it can be determined whether the storage block is fully written. After the storage block is fully written, a first check code corresponding to the current storage block is calculated and written to the above-mentioned programming status information file.

It is well known to those skilled in the art that a CRC check code is not the only check code that can be used to determine whether a write error occurs in a storage block. The first check code may be a CRC check code, or other check codes such as a checksum or a parity check code. Those skilled in the art can freely choose the type of check code to be used, which is not limited in the present invention. The "CRC" in FIG. 1B should not be regarded as limiting the present invention.

To determine whether a write error occurs in a storage block, the firmware package used in the present invention may also include a description information file "Hexinfo.txt". For example, the description information file used in the present invention may include "Sector ID", "Addr", "Size", "second check code" (a "CRC" is still used as an example in the figure) and other contents as shown in FIG. 1C. Likewise, the "CRC" herein should not be considered as limiting the present invention.

"Sector ID" is consistent with that in the above-mentioned executable file, and is also an identifier of a storage block. "Addr" may be a starting address of the storage block, or may be an address range of the storage block. "Size" is the number of addresses contained in the storage block or the space size of the storage block.

Likewise, the specific contents of the firmware packages shown in the figure should not be construed as limiting the present invention.

In addition, since the contents of the above-mentioned description information file are descriptive only, when the firmware package is written to the ECU, only data in the executable file may be written to the storage blocks, while the OTA master controller reads relevant contents of the description information file from the firmware package. Alternatively, data in the executable file may be written to the storage blocks, while contents of the description information file may be written to other memories such as an EEPROM or a DFLASH. It will be appreciated that, since the description information file does not need to be divided into multiple data blocks, there is no need to specify addresses for the data in the file and thus no need to specify a memory for storing the file. It is only necessary to distinguish the memory for storing the description information file from the memory storing the executable file. According to an embodiment of the present invention, the executable file may be written to a program Flash, while the description information file may be written to a data Flash. The program Flash and the data Flash are different from each other.

Based on the contents of the above-mentioned description information file, in an embodiment disclosed in the present invention, determining the occurrence of a write error in a storage block based on the storage response message may include steps S1031 to S1032 as follows.

In step S1031, a second check code generated based on data of the data block is obtained.

In this step, the OTA master controller may obtain the second check code from the firmware package, or may control the ECU to obtain the second check code from the memory storing the description information file.

In step S1032, the first check code is compared with the second check code for consistency to determine whether a write error occurs in the storage block.

In this step, whether a write error occurs in a storage block is determined by comparing the first check code with the second check code for consistency. The first check code is generated based on data already written to the storage block, and the second check code is generated based on original data in the firmware package. Moreover, according to the above embodiment of the present invention, each storage block corresponds to a first check code and a second check code.

It will be appreciated that for comparison, the first check code and the second check code should be generated in the same manner and based on the same data. Data used to generate a first check code and a second check code corresponding to Sector_m may be all data corresponding to Sector_n to Sector_m, or may be only data corresponding to Sector_m.

The above process of determining whether a write error occurs in a storage block may be a process in which the OTA master controller determines, during writing, whether a write error occurs based on the description information file and the storage response message, or a process in which a program determines, during execution of the firmware program, whether a write error occurs.

Those skilled in the art are well aware that a storage space such as a Flash has the characteristic that data can only be written to blank storage units, and therefore existing data must be erased before writing. The smallest storage unit is a page, and multiple pages form a block (Sector). Writing is performed page by page, while erasing is performed block by block. Therefore, when implementing breakpoint resumption of transmission of the firmware package to the storage space, regardless of whether the location of a breakpoint at which an anomaly occurs is determined at a block level or at a page level, all existing data in the entire block must be erased before subsequent rewriting.

If the breakpoint is determined at a page level, it is necessary during writing to immediately determine whether a write error occurs each time a page is completely written. Since erasing is performed block by block, regardless of whether data is not backed up and the data corresponding to the current storage block is retransmitted, or data is backed up and the data corresponding to the current storage page is retransmitted, the load on the ECU will be increased. Therefore, in the solutions of the present invention, the location of the breakpoint is determined at a block level, which helps achieve breakpoint resumption of the firmware package while avoiding an excessive load on the ECU.

According to an embodiment of the present invention, the firmware package may be used to upgrade firmware of an ECU node in a vehicle. The vehicle usually includes multiple ECU nodes. Each ECU node has a storage space and controls one or more functional modules. For example, ECU node A is used to control a power system of the vehicle, ECU node B is used to control air conditioning of the vehicle, and ECU node C is used to control interior lighting, and so on.

Since the vehicle needs to read data in the memory during driving and simultaneous writing and reading can heavily burden the memory, continuing firmware upgrade during driving will impair vehicle performance and even endanger the user's personal safety. Therefore, according to an embodiment disclosed in the present invention, when it is detected that the vehicle is in a driving state, upgrade of an ECU node whose importance level is a preset level may be interrupted. The method may include steps S1033-S1035 as follows.

In step S1033, an importance level of an ECU node is determined.

In this step, the importance level of the ECU node currently being upgraded may be determined based on factors such as driving safety and user experience. According to the above embodiments of the present invention, ECU node A controls the vehicle power system, and its importance level is considered to be important based on the factor of driving safety; and ECU node C controls interior lighting, and its importance level is considered to be unimportant based on factors such as driving safety and user experience. It will be appreciated that the factors used to determine the importance level of ECU nodes in the present invention are not limited to the above-mentioned two factors of driving safety and user experience. Those skilled in the art may flexibly select factors for determining the importance level based on the actual situation.

In step S1034, it is determined whether the vehicle is in a driving state.

In this step, in order to further avoid erroneous determination and strike a balance between firmware upgrade, driving safety, and user experience, whether the vehicle is currently in the driving state may be comprehensively determined based on information such as location, vehicle speed, acceleration, and presence of an occupant at the driver's seat.

In step S1035, when the vehicle is in the driving state, an ECU node whose importance level is a preset level is interrupted.

Specifically, if it is detected that the importance level of the current ECU node is important and the vehicle is in the driving state, a write process of the current ECU node may be interrupted to protect the safety of the user.

If it is detected that the importance level of the current ECU node is not important, regardless of whether the vehicle is in the driving state, the current write process may not be interrupted so as to continue the firmware write process during driving of the vehicle, minimizing the time during which the user cannot use the vehicle due to the need for firmware upgrade, thereby facilitating use by the user.

In step S104, if it is determined that a write anomaly occurs in a storage block, a target data block is determined based on the storage block identifier in the storage response message, and the target data block is rewritten to a storage block indicated by the storage block identifier.

In this step, the OTA master controller may determine the storage block identifier after determining that a write anomaly occurs in a storage block, and write a data block corresponding to the storage block in which the write anomaly occurs.

It will be appreciated that before writing the above target data block to the corresponding storage block, the OTA master controller may also determine whether a current condition meets a preset resumption condition. For example, in the case where the write process was interrupted by the user or the write process was interrupted while the vehicle was in the driving state, the current driving state of the vehicle may be determined, and when the vehicle is currently idle, the user is prompted to determine whether to perform breakpoint resumption, or the OTA master controller determines whether to perform breakpoint resumption. A method for determining the current driving state of the vehicle may be as illustrated in step S1034 described above.

Thus, the present invention discloses a method for upgrading firmware of an ECU. This method of the present invention can achieve breakpoint resumption by determining a storage block to which a breakpoint belongs, and rewriting a data block corresponding to the storage block. When it is detected that a vehicle is in a driving state, it is possible to only interrupt firmware upgrading of ECU nodes with higher importance levels and continue firmware upgrading of ECU nodes with lower importance levels. This reduces the downtime of the vehicle for firmware upgrading to within thirty minutes while ensuring driving safety, thereby improving user experience.

Corresponding to the embodiments of the above-described method, the present invention further provides embodiments of an apparatus for upgrading firmware of an ECU, an electronic device terminal using the same, and a storage medium storing a software program.

Embodiments of a file processing apparatus of the present invention may be applied to a computer device, such as a server or a terminal device. The apparatus embodiments may be implemented by software, hardware, or a combination thereof. Taking software implementation as an example, the apparatus, as a logical apparatus, is formed when a file processing processor of the device in which the apparatus is located reads corresponding computer program instructions stored in a non-volatile memory into a memory and executes the computer program instructions.

According to a second aspect of the present invention, as shown in FIG. 2, a vehicle 200 is provided. The vehicle is provided with an OTA master controller 201 and at least one ECU node. The ECU node has a storage space, which includes a plurality of storage blocks. The OTA master controller 201 is configured to execute the method corresponding to the above method embodiments.

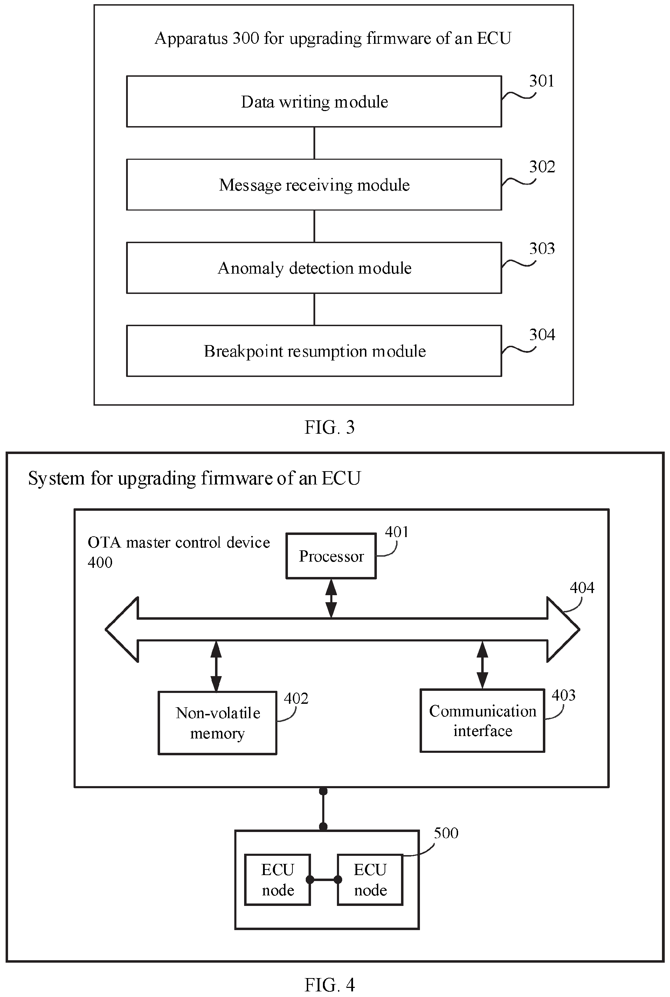

According to a third aspect of the present invention, an apparatus 300 for upgrading firmware of an ECU is provided. Data in a firmware package is divided into multiple data blocks. Each data block corresponds to an address range of one storage block in a storage space of the ECU. FIG. 3 shows a software structure diagram of an electronic device where the apparatus for upgrading firmware of an ECU according to an embodiment of the present invention is located. The apparatus includes: a data writing module 301, a message receiving module 302, an anomaly detection module 303, and a breakpoint resumption module 304.

The data writing module 301 is configured to write each data block to a corresponding storage block in the storage space.

The message receiving module 302 is configured to receive a storage response message returned from the storage space. The storage response message carries a storage block identifier.

The anomaly detection module 303 is configured to determine whether a write anomaly occurs in a storage block. The write anomaly includes a write anomaly determined based on the storage response message.

The breakpoint resumption module 304 is configured to, when it is determined that a write anomaly occurs in a storage block, determine a target data block based on the storage block identifier in the storage response message, and rewrite the target data block to a storage block indicated by the storage block identifier.

In another embodiment, the apparatus for upgrading firmware of an ECU includes a processor configured to execute the above program modules stored in a memory, the program modules including the data writing module, the message receiving module, the anomaly detection module, and the breakpoint resumption module.

According to a fourth aspect of the embodiments of the present invention, a system for upgrading firmware of an ECU is provided. As shown in FIG. 4, the system includes an OTA master control device 400 and at least one ECU node 500. The ECU node 500 has a storage space, which includes a plurality of storage blocks.

The OTA master control device 400 includes a processor 401, a memory 402, a computer program stored in the memory 402 and executable on the processor 401, a communication interface 403, and a bus 404. When the processor 401 executes the program, the method according to the first aspect is implemented. The processor 401, the memory 402, and the communication interface 403 are communicatively connected to each other inside the device through the bus 404.

The processor 401 may be implemented by a general-purpose central processing unit (CPU), a microprocessor, an application specific integrated circuit (ASIC), or one or more integrated circuits, and is used to execute a relevant program to implement the technical solutions provided in the embodiments of this specification.

The memory 402 may be implemented in the form of a read only memory (ROM ), a random access memory (RAM), a static storage device, a dynamic storage device, etc. The memory 402 may store an operating system and other application programs. When the technical solutions provided in the embodiments of this specification are implemented through software or firmware, related program codes are stored in the memory 402 and invoked and executed by the processor 401.

The communication interface 403 is configured to connect to a communication module (not shown in the figure) to enable communication between the device and other devices. The communication module may communicate via wired means (e.g., USB, network cable, etc.) or via wireless means (e.g., mobile network, WI-FI, Bluetooth, etc.).

The bus 404 includes a path for transmitting information between various components (e.g., the processor 401, the memory 402, and the communication interface 403) of the device.

It should be noted that although only the processor 401, the memory 402, the communication interface 403, and the bus 404 are illustrated for the above-described device, during actual implementation, the device may further include other components necessary for normal operation. In addition, those skilled in the art will appreciate that the device may include only components necessary to implement the embodiments disclosed herein, and does not necessarily include all the components illustrated in the figure.

Corresponding to the embodiments of the above-described method, the present invention further provides embodiments of a computer-readable storage medium for updating firmware of an ECU, the computer-readable storage medium having a program stored therein. The program, when executed by a processor, causes corresponding operations in the above method embodiments to be implemented.

Since the apparatus, device and storage medium embodiments substantially correspond to the method embodiments, reference may be made to descriptions of the method embodiments for related details. The apparatus embodiments described above are merely illustrative. Those modules described as separate components may or may not be physically separate, and those components shown as modules may or may not be physical modules, i.e., they may be located in one place or distributed over multiple network modules. Some or all of the modules may be selected according to actual needs to achieve the objectives of the solutions of the present invention. This will be appreciated and implemented by those of ordinary skill in the art without creative efforts.

Particular embodiments of the present invention are described above. Other embodiments are within the scope of the appended claims. In some cases, actions or steps recited in the claims may be performed in an order different from that in the embodiments, with expected results still achievable. In addition, processes depicted in the accompanying drawings do not necessarily need to be implemented in the illustrated order or consecutive order to achieve an expected result. In some implementations, multitasking and parallel processing are also possible or may be advantageous.

After considering this specification and practicing the invention disclosed herein, those skilled in the art will readily conceive of other embodiments of the present invention. The present application is intended to cover any variations, uses or adaptive changes of the present invention that follow the general principles of the present invention and include common knowledge or customary technical means in the art not disclosed herein. This specification and the embodiments are to be regarded as merely exemplary, and the true scope and spirit of the present invention are indicated by the appended claims.

It should be appreciated that the present invention is not limited to the precise structures described above and shown in the drawings, and various modifications and changes may be made thereto without departing from the scope thereof. The scope of the present invention is defined only by the appended claims.

Described above are merely preferred embodiments of the present invention, which are not intended to limit the present invention. All modifications, equivalent substitutions and improvements made within the spirit and principles of the present invention should be encompassed within the protection scope of the present invention.

## Claims

1. A method for upgrading firmware of an electronic control unit, ECU, wherein data in a firmware package is divided into multiple data blocks, each data block corresponding to an address range of one storage block in a storage space of the ECU, and the method comprises:
writing each of the data blocks to a corresponding storage block in the storage space;
receiving a storage response message returned from the storage space, wherein the storage response message carries a storage block identifier;
determining whether a write anomaly occurs in a storage block, wherein the write anomaly comprises a write anomaly determined based on the storage response message; and
if it is determined that a write anomaly occurs in a storage blocks, determining a target data block based on the storage block identifier in the storage response message, and rewriting the target data block to a storage block indicated by the storage block identifier.

2. The method according to claim 1, wherein the write anomaly determined based on the storage response message comprises:
a response duration of the storage response message exceeding a preset value; or
a write error occurring in a storage block.

3. The method according to claim 2, wherein the storage response message carries a response duration or a first check code, wherein the first check code is generated based on data already written to a storage block and is used to indicate that a write error occurs in the storage block.

4. The method according to claim 3, wherein the write error comprises:
an error in the written data; or
incomplete writing of data to the storage block.

5. The method according to claim 3, wherein determining whether a write error occurs in the storage block based on the storage response message comprises:
obtaining a second check code generated based on data of the data block; and
comparing the first check code with the second check code for consistency to determine whether a write error occurs in the storage block.

6. The method according to claim 1, wherein the ECU is disposed on a vehicle comprising a plurality of ECU nodes, each ECU node having a storage space, and the method further comprises:
when the vehicle is in a driving state, interrupting a write process of an ECU node whose importance level is a preset level.

7. A vehicle provided with an over-the-air, OTA, master controller and at least one ECU node, wherein the ECU node has a storage space comprising a plurality of storage blocks, and the OTA master controller is configured to execute the method according to any one of claims 1 to 6.

8. An apparatus for upgrading firmware of an ECU, wherein data in a firmware package is divided into multiple data blocks, each data block corresponding to an address range of one storage block in a storage space of the ECU, and the apparatus comprises:
a data writing module, configured to write each of the data blocks to a corresponding storage block in the storage space;
a message receiving module, configured to receive a storage response message returned from the storage space, wherein the storage response message carries a storage block identifier;
an anomaly detection module, configured to determine whether a write anomaly occurs in a storage block, wherein the write anomaly includes a write anomaly determined based on the storage response message; and
a breakpoint resumption module, configured to, if it is determined that a write anomaly occurs in a storage block, determine a target data block based on the storage block identifier in the storage response message, and write the target data block to a storage block indicated by the storage block identifier.

9. A system for upgrading firmware of an ECU, comprising an OTA master control device and at least one ECU node, wherein the ECU node has a storage space comprising a plurality of storage blocks, and the OTA master control device comprises:
a processor;
a memory; and
a computer program stored in the memory and executable on the processor,
wherein the processor, when executing the program, causes the method according to any one of claims 1 to 6 to be implemented.

10. A computer-readable storage medium having a program stored therein, wherein the program, when executed by a processor, causes operations of the method according to any one of claims 1 to 6 to be implemented.
